# EUROPEAN PATENT SPECIFICATION

(11) **EP 0 840 997 B1**
(45) Date of publication and mention of the grant of the patent: **18.07.2001**
(21) Application number: 98200067.1
(22) Date of filing: 13.01.1993
(51) Int. Cl.: A01C 17/00

(54) **An implement for spreading material**
Gerät zum Streuen von Material
Outil pour épandre de matériau

(30) Priority: 15.01.1992 NL 9200063; 30.09.1992 NL 9201689
(43) Date of publication of application: 13.05.1998
(62) Divisional of application: 93200080.5
(73) Proprietor: MAASLAND N.V., 3155 PD Maasland (NL)
(72) Inventor: Bom, Cornelis Johannes Gerardus, 3181 VC Rozenburg (NL); van der Waal, Pieter Jacob, 3145 LB Maassluis (NL)
(74) Representative: Corten, Maurice Jean F.M.

(56) References cited:
- EP-A- 0 347 643

## Description

The invention relates to an implement for spreading material, comprising at least two spreader members which are arranged at opposite sides of a plane of symmetry, each of these spreader members being rotatable about an upwardly extending axis of rotation in opposite directions, which in plan view at the outersides of the implement are directed backwards, the implement being provided at at least one outerside with respect to the plane of symmetry with a guide member for the material to be spread, said guide member comprising spreading elements having upstanding parts.
Such an implement is known from EP 0 347 643 A1.

In this document an implement for spreading material is described, having a guide member to limit the amount of material to be spread into the direction of the plane of symmetry of the implement.

If the known implement is used to spread along a fence the spreader member situated at the side of the fence is put out of work and behind the other spreader member at a relatively large distance a guide member is arranged. Said spreader member is put into rotating, so that the material is spread into the direction of the fence.

The disadvantage of this implement is that it is not well possible to prevent that material will pass over the fence and e.g. may come into a ditch at the side of the field.

It is the aim of the invention to overcome this disadvantage.

According to the invention at least a number of the spreading elements have upstanding parts which are extending at least partly parallel to the plane of symmetry and are provided with a bend at the rear ends which, with respect to the direction of movement 15 of the implement extend obliquely rearwardly in the direction of the plane of symmetry.

According to an advantageous construction of the invention a number of the spreading elements have a free end extending in the direction of movement 15 of the implement.

These spreading elements improve the sharp limit of the material possibly to be spread in the direction of the fence under certain conditions.

According to an other advantageous construction of the invention only the rearmost spreading elements are provided with a bend in the direction of the plane of symmetry.

This construction supports the spreading of the material in a direction away from the fence.

The invention relates further to a method for spreading material over a surface area with the aid of an implement comprising at least two spreader members, each of which can spread the material during travel of the implement over the field to both sides of the implement over at least substantially equal distances, wherein for spreading the material to at least substantially one side of the implement the action of one of the spreader members is stopped.

According to the invention for spreading along a field edge the spreader member situated at the side of the field edge will rotate, whereas the other spreader member is stopped and that to the implement at the side of the field edge a guide member is connected which collects the material spread by the rotating spreader member and diverts the material away from the field edge backwards and to the side where the spreader member which is stopped is situated.

This method overcomes the disadvantages of the known methods e.g. described in EP 0 347 643 A1.

This method can be successfully used by the implements described above.

For a better understanding of the invention and to show how the same may be carried into effect, reference will now be made, by way of example, to the accompanying drawings of an embodiment of the invention, in which drawings:
Figure 1 is a schematic plan view of the manner in which the material is spread in an implement not in accordance with the invention over a surface to be spread;
Figure 2 is a schematic vertical cross-sectional view of the spread pattern of the implement of Figure 1;
Figure 3 is a plan view of the implement of Figure 1, in which the hopper of the implement has been omitted;
Figure 4 is, to an enlarged scale, a plan view of the spreader member and a horizontal cross-sectional view of the guide member of the implement of Figure 1;
Figure 5 is a side view of the alternative implement not in accordance with the invention, taken in the direction of arrow V in Figure 3;
Figure 6 is a side view of a still further connection of the guide member in the implement of Figure 1;
Figure 7 is a rear view of the connection shown in Figure 6, taken in the direction of arrow VII in Figure 6;
Figure 8 is a schematic plan view of the manner in which the material is spread over a surface to be spread in accordance with the invention;
Figure 9 is a schematic vertical cross-sectional view of the spread pattern of the implement in accordance with the invention;
Figure 10 is a plan view of the implement in accordance with the invention, in which the hopper of the implement has been omitted;
Figure 11 is a side view of a connection of the guide member in the implement in accordance with the invention;
Figure 12 is a plan view of an embodiment of the implement in accordance with the invention, in which the hopper of the implement has been omitted, and
Figure 13 is a side view of a connection of the guide member in the embodiment of the implement in accordance with the invention of Figure 12.

The invention relates to an implement for spreading material over a surface area, more specifically for spreading material, such as, for example, fertilizer over agricultural fields. Usually, the implement in accordance with the invention spreads the material during travel over the surface to be spread to both sides of the longitudinal axis of the implement through equal distances. In this situation, the material can be spread over a strip having a width of, for example, approximately 48 metres. Depending on the material to be spread and the manner in which the implement is further designed, this width may be different or be chosen differently, respectively. The implement may be a self-propelled machine or, as in the embodiment shown, an implement which can be mounted to a tractor or a suchlike vehicle.

An implement not in accordance with the invention is couplable to a tractor 2, by means of which it is moved during operation over the surface to be spread.

The implement has, as is shown, two spreader members 3 and 4 which can each be caused to rotate during operation about respective rotary shafts 5 and 6. The spreader members 3 and 4 are located transversely to the longitudinal axis of the implement in a side-by-side relationship and on either side of said longitudinal axis. The implement includes a frame 7, to which a hopper 8 is attached. During operation, the material to be spread is supplied from the hopper 8 to the spreader members 3 and 4, which each, during normal operation, spread the material at least substantially through the overall spread width and on both sides of the longitudinal axis of the implement over at least substantially equal distances.

The quantity of material that can be fed per unit of time from the hopper 8 to the spreader members 3 and 4 can be controlled by means of a dosing member 9 arranged between the hopper and each spreader member 3 and 4. The dosing members 9 are basically identical to each other and are therefore not shown individually. The dosing members include dish-like discharge members 10 which connect up with the bottom ends of two nozzle-like portions of the hopper 8. In this implement, each of the discharge members has two discharge apertures 11, through which the material can be supplied from the hopper to the spreader members. The discharge apertures 11 can optionally be closed to a greater or lesser extent in order to control the quantity of material which can be fed to the spreader members per unit of time. In this implement, closing members 12 can be moved for that purpose along the discharge apertures 11 and optionally be locked in one of a plurality of positions. The closing members are coupled to an adjusting member 13 provided on the frame of the implement.

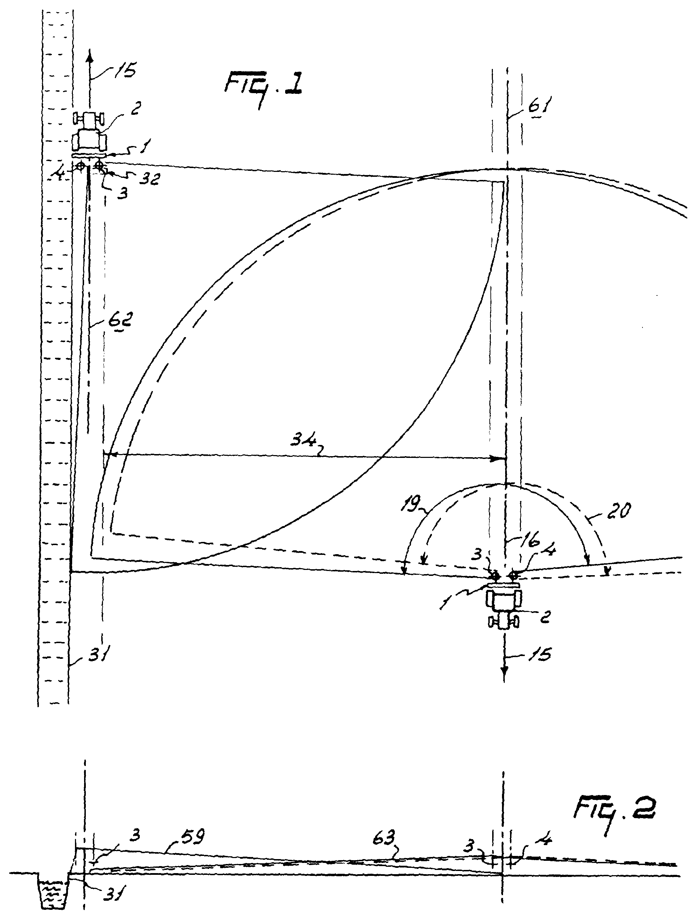

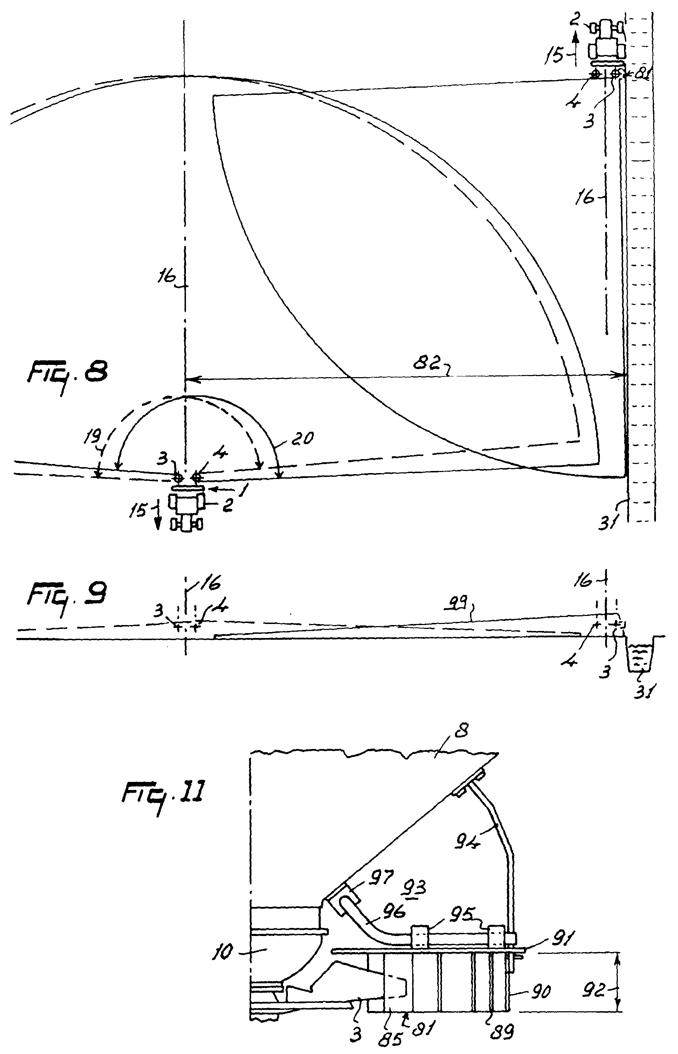

During operation, the implement is moved in the direction 15, during which the material is spread on opposite sides of the centre longitudinal plane 16 of the implement. The centre longitudinal plane 16 is located halfway between the two spreader members 3 and 4 and parallel to the rotary shafts 5 and 6, which extend parallel to each other. The shafts 5 and 6 are in a vertical position when the implement and consequently, the two spreader members are in the horizontal position. In operation, the spreader members 3 and 4 can be driven in the respective directions of rotation 17 and 18, in which the spreader members spread the material over spread sections 19 and 20. The directions of rotation 17 and 18 are such that the facing sides of the spreader members 3 and 4 move in a direction opposite to the direction in which the material is predominantly spread. In this situation, each of the spreader members spreads the material to both sides of the centre longitudinal plane 16 at least through approximately equal distances, as is shown more in particular in the spread sections which are schematically and partly shown in Figures 1 and 8. The material spread over the spread sections 19 and 20 preferably leaves, as in these embodiments, the periphery of the relevant spreader member through an angle 21 of approximately 180°.

The spreader members 3 and 4 are disposed on a carrier member 24 which is constituted by a cabinet comprising drive means for driving the spreader members. These drive means include a stub axle 25 which projects from the cabinet-like carrier and can be connected in a manner not further shown to the power take-off shaft of the tractor 2 via an intermediate shaft.

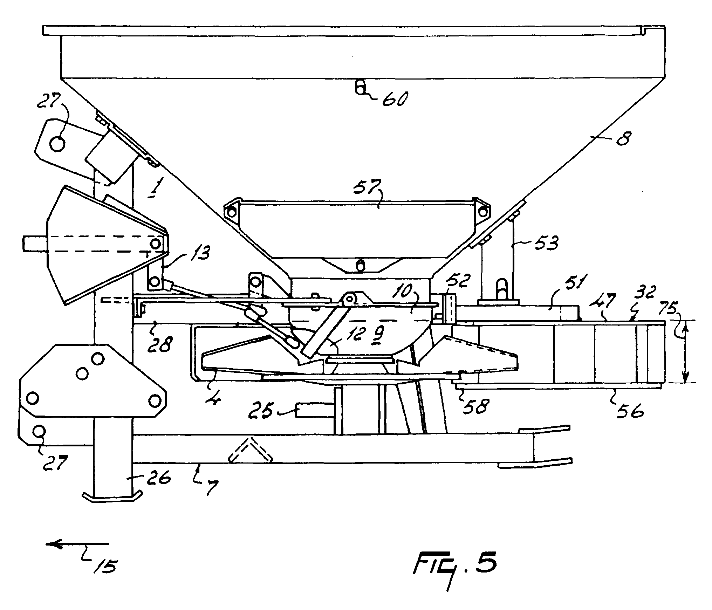

For the connection of the implement to the tractor, the frame 7 of the implement is provided at its leading side with a predominantly vertically extending frame work 26 which includes coupling members 27 which are couplable to the three-point lifting hitch of the tractor. Relative to the normal direction of travel 15, the frame includes rearwardly extending frame beams 28 which support the hopper and are connected to the bottom ends of the discharge nozzles of the hopper. The hopper is further connected, as is shown more particularly in Figure 5, to the upper side of the frame work 26.

For the purpose of spreading material along field edges 31 of, for example, agricultural fields, the implement can be used such that the material is predominantly spread to only one side of the implement. For this spread mode the supply of material to one of the two spreader members is stopped, so that this spreader member does not spread any material any more during the spreading operation along the field edge. In the implement not in accordance with the invention, illustrated in Figures 1 to 7, the spread of the material by the spreader member 4 is stopped, which spreader member is located at that side of the centre longitudinal plane 16 that faces the field edge 31. Material will then only be spread by the other spreader member, the spreader member 3. A guide member 32 is provided near this spreader member 3. This guide member is of such a design and is mounted such, that, in normal operation, the material spread by the spreader member 3 to that side of the centre longitudinal plane 16 in which the spreader member 4 is present, is collected by the guide member 32. The material collected by the guide member 32 is diverted such that this collected material is predominantly spread to that side of the centre longitudinal plane 16 in which the spreader member 3 is located. The guide member 32 is designed such that the material collected by this guide member is spread at least predominantly through a distance approximately equal to the distance 34 through which the spreader member 3 spreads the material to that side during normal operation. The guide member 32 is designed such that at least approximately half of the material spread by the spreader member 3 is collected and is diverted for being spread to that side of the centre longitudinal plane 16 where the spreader member 3 is located. The guide member 32 therefore connects up with the spreader member 3 through a circumferential angle 33 which is approximately equal to half the circumferential angle 21 through which the material leaves the periphery of the spreader member for the purpose of being spread.

The guide member 32 comprises a number of guide elements, which number can be chosen in connection with the desired distribution of the material to be spread. The number of guide elements can be not less than five. In this implement, the guide member 32 has nine guide elements 35 - 43, the guide element 35 being disposed near that end of the guide member that is nearest to the centre longitudinal plane 16. The guide elements 36 - 43, arranged one after the other from the guide element 35 onwards, are increasingly farther away from the guide element 35 and from the centre longitudinal plane 16 in the direction in which the material is spread. In this implement, the guide elements 35 and 36 are both arranged near the centre longitudinal plane 16 and on both sides of this plane.

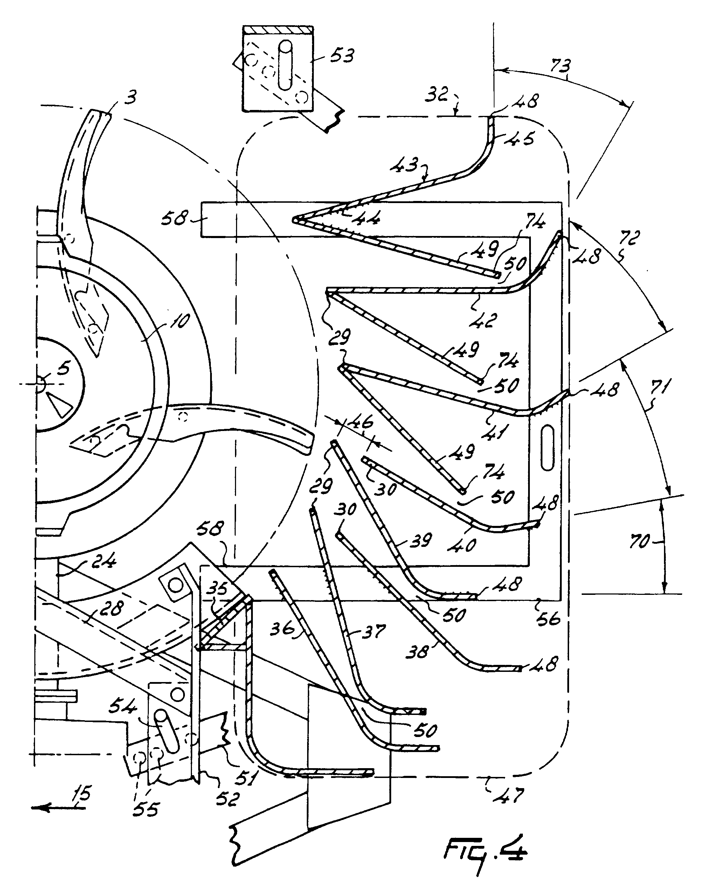

Each of the guide elements 35 - 43 includes two straight portions which are arranged at an angle to each other and are interconnected by curved portions 64. One of these straight portions of each guide element constitutes a collecting member 44. This collecting member 44 of each guide element collects the material leaving the spreader member through a portion of the circumferential angle 33 and conveys this material to the other straight portion of the guide element. This other portion constitutes a member 45 which determines the direction of spread. The collecting member and the spread direction member of each of the guide elements are denoted by the respective reference numerals 44 and 45. The ends 29 of the collecting members 44 of the guide elements connect at an equal and short distance to the circumference of the spreader member 3. In this implement, this distance will be approximately 2 cms and, although this distance may be chosen to be slightly different, can be approximately equal to this distance. Only the guide elements 38 and 40 have collecting members 44 which are located at a larger distance from the periphery of the spreader member 3. Those ends 30 of the collecting members 44 of the guide elements 37 and 39 that are nearest to the periphery of the spreader member 3 are located at distances 46 from the ends, located near the periphery of the spreader member 3, of the adjacent guide elements 37 and 39, the arrangement being such as is shown in Figure 4. The distances 46 amount in this implement to approximately 3 to 4 cms, but may alternatively be chosen to be slightly different. The extended portions of the collecting members 44 of the guide elements extend at least approximately through the ends 29 of the respective guide elements 37 and 39 which are arranged in a side-by-side relationship in the direction towards the plane 16. The spread direction members 45 of the guide elements 35, 36, 37, 38 and 39 extend in this implement at least approximately parallel to the centre longitudinal plane 16 or to the normal direction of travel 15, respectively. The spread direction members 45 of the remaining guide elements extend towards their ends 48 in directions which successively enclose in the direction away form the guide element 40 up to and inclusive of the guide element 43 an increasingly larger angle with the centre longitudinal plane 16. The spread direction members 45 of the consecutive guide elements 40 - 43 enclose in this implement respective angles of 10°, 30°, 60° and 90° with the centre plane 16. The angles 70, 71, 72 and 73 between the spread direction members 45 of the consecutive guide elements 39 - 43 are then 10°, 20°, 30° and 40°, respectively. If advisable for the distribution of the material, these angles may alternatively be chosen slightly differently. The element 43 most remote from the plane 16 will, however, by means of its portion 45 enclose an angle with the plane 16 of at least approximately 90°. In addition, the spread direction members 45 of one or a plurality of guide elements may, for example, be disposed such that they are adjustable with respect to the collecting members 44 of these guide elements. The spread direction members 45 of the guide elements 38 and 40 may, for example, be disposed such that they are pivotal and optionally lockable in one of at least two different positions relative to the collecting members 44 of these guide elements 38 and 40. This renders it possible to set the direction in which the material is spread along these spread direction members 45. The distribution of the material over the strip to be spread can be influenced thereby.

The guide member 32 is provided between the consecutive guide elements 40 - 43 with straight guide plates 49. By means of their ends closest to the spreader member 3, the guide plates 49 are contiguous to the ends 29 of the collecting members 44 of the guide elements 41, 42 and 43. In a direction away from the spreader member 3, these guide plates 49 form, together with the guide elements 40, 41 and 42 which are respectively adjacent to each one of them in the direction of the centre longitudinal plane 16, converging spaces, in which the material is collected and can be conveyed to the relevant spread direction members 45 of the guide elements 40, 41 and 42. Those ends 74 of the guide plates 49 remote from the spreader member 3 are located at such a distance from the relevant guide elements that a flow-out aperture 50 having a width of approximately 2 cms (seen in a plan view in Figure 4) is formed. The guide elements 36 and 37 and the guide elements 38 and 39 are arranged such relative to each other that their portions located nearest to each other also form through-flow apertures 50 having a width of approximately 2 cms for guiding the material.

The guide member 32 includes a supporting plate 47, to which the upper sides of the guide elements are connected. This plate 47 is omitted from Figure 4 and only its periphery is represented by means of broken lines. Although in this implement the plate 47 extends perpendicularly to the rotary shaft 5, it may alternatively enclose a smaller angle with this rotary shaft. The supporting plate 47 is at a slightly higher level than the upper side of the spreader member 3. The guide elements 35 - 43 are in the shape of plates, the upright sides of these plate-like elements extending parallel to the rotary shaft 5 of the spreader member 3. The guide elements 35 - 43 have a height 75 which is greater than the height of the spreader member 3. The lower and upper sides of the guide elements are then at a lower and a higher level than the lower and upper side of the spreader member. Measured in a direction perpendicular to the centre longitudinal plane 16, the guide member 32 has a length 76 which is approximately equally large, in this implement slightly larger than the diameter 77 of the spreader member 3. In this situation, the guide member 32 extends by means of one end 78 from near the centre longitudinal plane 16 to as far as an imaginary plane 80 which is located parallel to the plane 16 and includes that side of the spreader member 3 that is remote from the plane 16. The end 79 of the guide member 32 is then located in parallel with the end 78 and near the plane 80.

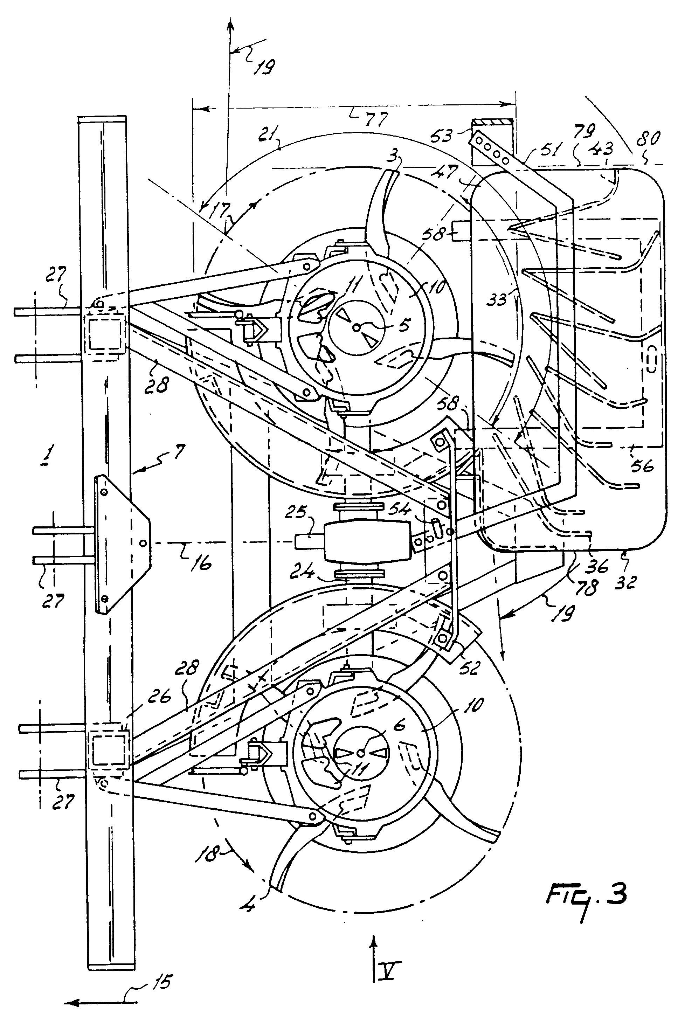

Arranged at the upper side of the supporting plate 47 is a coupling member 51, by means of which the guide member 32 is detachably connected to the implement. In this implement, the coupling member 51 includes a strip-like bracket, which has one end connected to a connecting element 52 provided near the ends of the frame beams 48 and the other end to a support 53 attached to the hopper 8, as is shown in Figures 3 and 5. The guide member 32 may alternatively be detachably connected to the implement in a different manner. The coupling member 51 is provided at each of the ends with a plurality of apertures 55, through one of which a locking pin can optionally be inserted for connecting the coupling member 51 to the connecting element 52 and the support 53. By inserting the locking pins 54 optionally in one of the apertures 55, and by connecting them to the element 52 or to the support 53, the position of the guide member 32 relative to the spreader member 3 can be slightly altered.

At the bottom side, the guide member 32 is provided with a hanger 56, via which the guide member 32, when not in use, can be attached to a collecting bracket 57 attached to one side of the hopper 8, as is shown in Figure 5. When the guide member 32 is attached to the collecting bracket 57, the ends 58 of the hanger 56 are placed in the bracket 57. The guide member 32 is then further attached to the side wall of the hopper 8 by a lock pin 60.

In operation, the implement is moved over the surface area to be spread, either as a self-propelled machine, or connected to a tractor or a suchlike vehicle. For spreading material on strips along the edges of the surface to be spread, the implement can be moved very closely to this edge, as is shown in Figure 1 for the track 62 along the field edge 31. The implement can be moved as closely as possible along the field edge in the direction 15. As closely as possible along the field edge is then determined by the width of the machine and the condition of the surface along the field edge. For the spread 'of material on the strip along the field edge 31, this material is only spread by one of the two spreader members. In this implement, this is accomplished by spreading material only via the spreader member 3. The supply of material to the spreader member 4 is then stopped. To spread the material in the desired manner over the strip, of which one side is constituted by the field edge 31, the guide member 32 is disposed near the spreader member 3, the arrangement being such as in shown more in particular in Figures 3 and 4. The guide member 32 is then provided relative to the direction of operative travel 15 at the rear side of the spreader member 3. When the implement drives in operation along a field edge, the material is supplied to the spreader member 3 in the same manner as for a normal operating run, in which normal operating run the implement is moved over a track, for example the track 61, and wherein the material is spread equally far to both sides of the implement and the centre longitudinal plane 16 by each of the spreader members 3 and 4. During travel over the track 62 along the field edge 31, the material, and this also holds for travel over the track 61, is spread by the spreader member 3 to one side of the centre longitudinal plane 16, in this implement in the direction 15 at the right-hand side of the centre longitudinal plane 16, in a manner as for a normal operating run of over half the sector 19. The material, which during travel over a full-field track 61 would be spread to the left-hand side of the centre longitudinal plane 16 by the spreader member 3, is collected by the guide member 32 during travel along the field edge 31. Thus one half of the material, which is normally spread over the entire sector 19, is collected by the guide elements of the guide member 32 and distributed via these guide elements over at least approximately the distance 34 to the right-hand side of the centre longitudinal plane 16, all this being done such that half of the spread sector 19 which during a normal operating run over a full-field track 61 is spread to the left-hand side of the centre longitudinal plane 16, pivots as it were about a horizontal axis, coinciding with the longitudinal centre line of the implement located in the plane 16, to that half spread sector 19 that is located at the right-hand side of the centre longitudinal plane 16.

The guide elements 35 - 43 are arranged such that the distribution of the material spread via these elements is distributed over the entire distance through which the material is spread to the right-hand side at least predominantly in the same manner as the material which is not spread to the right by the spreader member via the guide member. Thus, during travel of the implement over the track 61, at the right-hand side of the implement and to behind the implement a same quantity of material is spread as when, travelling over a full-field track 61, is spread by the two spreader members 3 and 4 to the right-hand side of the implement and to behind the implement. In this manner, a distribution of the material over the edge strip, one side of which is constituted by the field edge 31, is obtained as is schematically shown in Figure 2 by the spread pattern 59. This spread pattern 59 coincides with half the spread pattern 63 obtained at the right-hand side of the longitudinal plane 16 on travel over the track 61. Thus the material can be spread over the surface substantially fully uniformly per unit of surface up to the field edge 31.

The guide elements 35, 36, 37 and 38 have their spread direction members 45 directed in such a manner to the direction of spread which, in this implement, points to the rear, that the material is not spread to beyond the field edge 31. The elements 40 - 43 successively guide the material at an increasingly larger angle with the direction of travel 15 in the lateral direction in order to distribute the material in the desired manner at least predominantly over the edge strip 34.

With the object of providing the strip along the field edge 31 with material, it is not necessary to make drastic changes in the implement, except for the fact that the guide member 32 is attached to the implement in such a manner that it encloses a portion of the spreader member 3, the arrangement being such that half of the material thrown by the spreader member 3 is collected by the guide member 32 and is distributed over the spread sector located at that side of the centre longitudinal plane 16 at which the spreader member 3 is arranged relative to this plane 16.

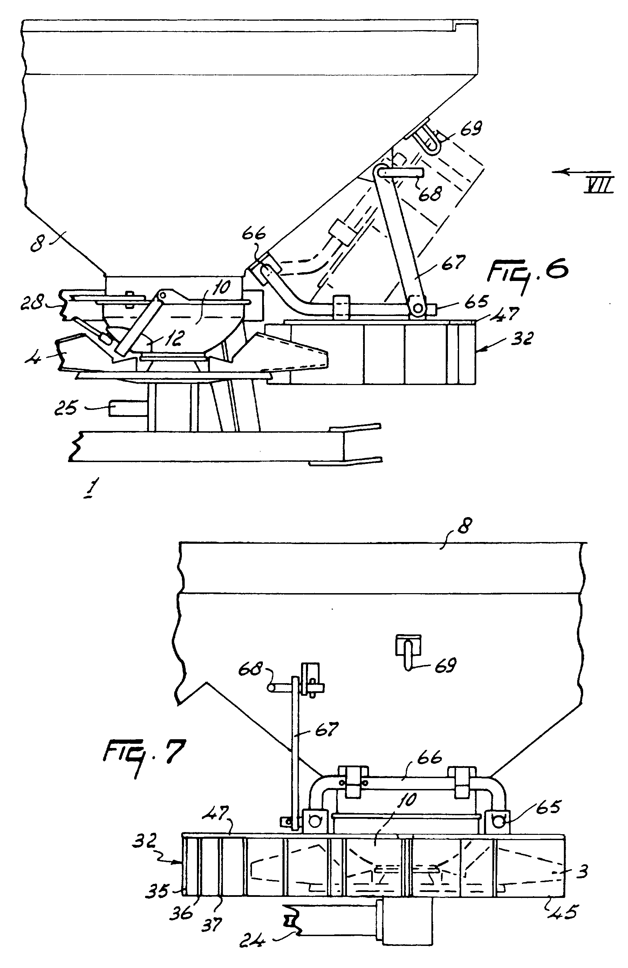

Although in this implement the guide member 32 is detachably fastened by means of the locking pins 54 to the implement, it will alternatively be possible to connect the guide member 32 in a different manner to the implement. It is, for example, possible to connect the guide member 32 pivotably to the implement. The guide member can then be moved from, for example, the working position in which the guide member 32 connects to the spreader member 3, to a rest position in which it is free from the spreader member. From this rest position, the guide member can then easily be moved to the working position again. Such a pivotal connection of the guide member 32 to the implement is shown in greater detail in Figures 6 and 7.

In the construction shown in Figures 6 and 7, the guide member 32 is provided at its upper side with a coupling member 65 which is connected capably of pivoting about a pivot pin 66 to the hopper 8. A locking member 67, in the form of a rod or strip, is connected pivotably to the guide member 32. By means of a lock pin 68 or a different type of connecting member, this locking member 67 can be connected to the hopper 8 so as to position the guide member 32 in the desired working position around the spreader member. The locking member 67 and/or coupling member 65 can, if so desired, be adjustable to render it possible to move the guide member optionally to one of two or a plurality of working positions relative to the spreader member.

The guide member 32 can be moved from the working position to a rest position by rotation about the pivot pin 66. The guide member 32 can be moved, for example, to a rest position, as illustrated in Figure 6 by means of broken lines. This rest position can, for example, be locked by a locking member 69. In this rest position, the locking member 67 can be positioned along the upper side of the guide member by, for example, a pivotal motion relative to the guide member 32.

Although in the implement not in accordance with the invention for spreading material over a strip which is contiguous to the field edge 31 a guide member 32 is arranged about a portion of the spreader member 3, it will alternatively be possible to connect for the purpose of spreading material over a strip along a field edge 31 a guide member to the spreader member 4 instead of to the spreader member 3. Using the same directions of rotation 17 and 18 of the spreader members 3 and 4, a guide member connectable to the spread member 4 may be formed such that it is mirror-inverted relative to the centre longitudinal plane 16 and the guide member 32. If such a mirrored guide member is placed around the spreader member 4, then a strip along a field edge 31 can be provided with material in a manner as illustrated by the spread pattern 59 by moving the implement along the field edge in a direction opposite to the direction 15 shown in Figure 1. The material will then be spread by the spreader member 4 to the left-hand side of the direction of travel. The guide member 32, such as it is shown in the drawings or a corresponding mirrored guide member which is connectable to the spreader member 4, is in both cases contiguous to the spreader member that is remote from the field edge, or located at that side of the centre longitudinal plane 16 that is remote from the side where the field edge 31 is located relative to the centre longitudinal plane.

If one or a plurality of spread direction members 45 of the guide elements is/are arranged capable of pivoting relative to the collecting member 44, the position of the spread direction members can be varied to obtain a desired distribution over the strip along the field edge, the arrangement being such that the desired spray pattern, for example the spray pattern 59, is obtained.

As is shown in this implement more particularly in Figure 4, the ends of the collecting members 44 which are contiguous to the circumference of the spreader member 3 are provided with interspaces which are at least approximately equal to each other. These ends of the guide elements are all located, with the exception of the ends of the elements 38 and 40, on the same imaginary circle about the rotary shaft 5. In this situation, the material will be collected through the circumferential angle 33, through which the material leaves the spreader member 3 and flows to the guide member 32, distributed in accordance with the interspaces between the collecting members 44 of the relevant guide members, and be spread with this distribution by the spread direction members 45 of the relevant guide elements 35 - 43.

Since the guide elements 38 and 40 have their ends 30 located at a distance 46 from the ends 29 of the adjacent guide elements 37 and 39, they distribute by means of the respective elements 37 and 39 the material supplied between the elements 37, 39 and between the elements 39, 40, respectively, to the guide member 32 through a portion of the width of the strip to be spread.

In an embodiment in accordance with the invention, shown in Figures 8 to 11, the spread of the material with the spreader member 4 is inhibited, this spreader member being located at that side of the centre longitudinal plane 16 that is not directed towards the field edge 31. Material will then still be spread with the other spreader member only, in this embodiment the spreader member 3. A guide member 81 is disposed near this spreader member 3. This guide member is of such a design and is disposed such that, the material which in normal operation of the implement is spread by the spreader member 3 to that side of the centre longitudinal plane 16 in which the spreader member 3 itself is present, is collected by the guide member 81. The material collected by the guide member 81 is diverted such that this collected material is predominantly spread to that side of the centre longitudinal plane 16 in which the spreader member 3 is located and to the other side of that plane but near to that plane. The guide member 81 is designed such that the material collected by this guide member is spread through a distance which is at least approximately equal to the distance 82 through which the spreader member 4 spreads the material to that side in normal operation. The guide member 81 is of such a design that at least approximately half of the material which is spread by the spreader member 3, is collected. The guide member 81 therefore connects to the spreader member 3 through a circumferential angle 83 which is approximately equal to half the circumferential angle 21 through which the material leaves the periphery of the spread member for being spread.

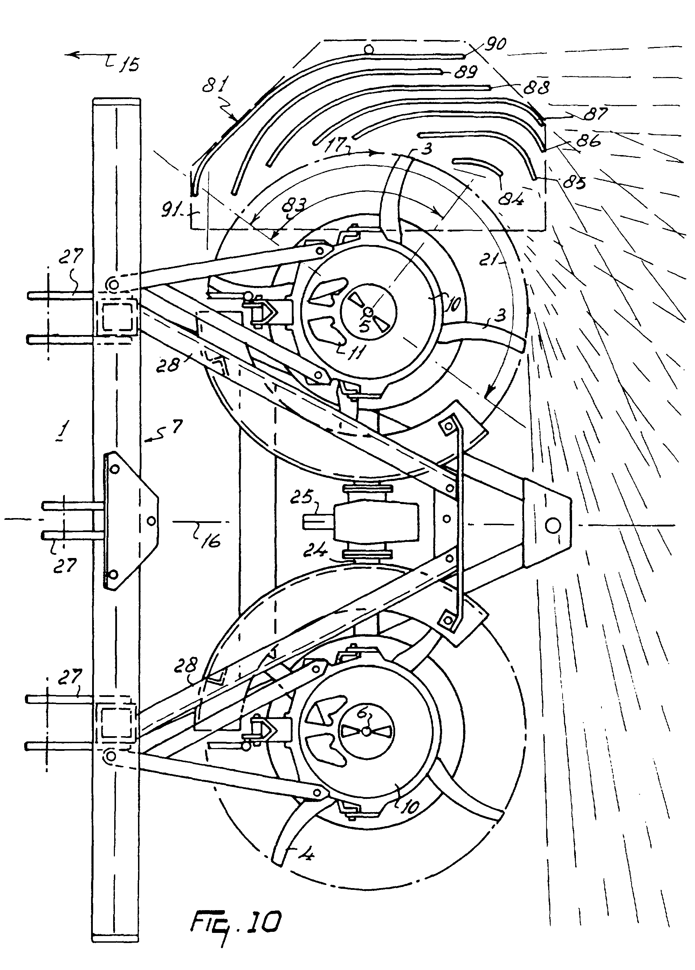

Also in this embodiment, the guide member 81 comprises a number of guide elements, which number can again be chosen in relation to the desired distribution of the material to be spread. In this embodiment, seven guide elements 84 - 90 are present, disposed in the manner shown in Figure 10. The guide member 81 includes a supporting plate 91, to which the upper sides of the guide elements are connected. Although also in this embodiment the plate 91 extends perpendicularly to the rotary shaft 5, it may alternatively enclose a smaller angle with this rotary shaft. The supporting plate 91 is at a slightly higher level than the upper side of the spreader member 3 (see Figure 11). The guide elements 84 - 90 are in the shape of a plate and in the upward direction extend parallel to the rotary shaft 5 of the spreader member 4. The guide elements 84 - 90 have a height 92 which exceeds the height of the spreader member 4. The lower and upper sides of the guide elements are in this situation at a lower and higher level, respectively, than the lower and upper side of the spreader member. In this embodiment, the length of the guide member 81 is slightly larger than the diameter of the spreader member 4. The guide member 81 extends with its long side in a direction parallel to the direction of travel of the implement, namely at that side of the spreader member 4 that is remote from the spreader member 3.

Provided at the upper side of the supporting plate 91 is a coupling member 93, with which the guide member 81 is pivotably arranged in the implement. In the operating position, the guide member 81 is locked with the aid of a fastening element 94. This fastening element 94 is arranged between the hopper 8 and the supporting plate 91. When the fastening element 94 has been detached at at least one side and has been pivoted away or entirely removed, the guide member 81 can be pivoted upwardly. For that purpose, the guide member 81 is fitted with carrier elements 95 which can be pushed over the outwardly extending ends of a carrier bracket 96. The carrier bracket 96 is attached capably of being pivoted upwardly to carrier elements 97 which are connected to the hopper 8. The carrier elements 95 and 97 form together with the carrier bracket 96 and the fastening element 94 the coupling member mentioned in the foregoing. In the upwardly pivoted state, the guide member 81 extends to under the hopper 8, obliquely upwardly in the lateral direction and can be locked in this position relative to the hopper 8.

Using the guide member in accordance with the invention, a spreader comprising two spreader members which, in normal operation of the device, each spread the material to both sides of the implement can be employed in a simple manner for spreading the material over a strip along a field edge, without the material being spread beyond this field edge. Using the guide member in accordance with the invention, whereby the spreading with the spreading member 4 is inhibited, the material can be spread according to the spreading pattern 99 shown in Figure 9.

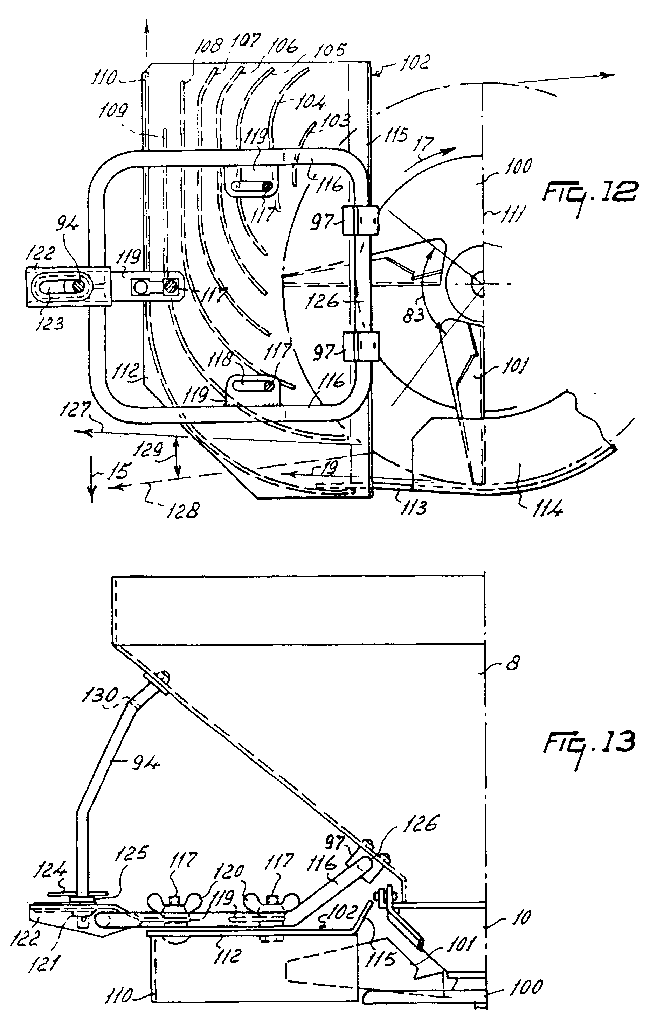

Figures 12 and 13 show a further embodiment of a guide member 102, which guide member is in its principal form equal to the guide member 81 of the embodiment shown in Figures 8 - 11. The guide member 102 according to Figures 12 and 13 adjoins around a part of the circumference of a rotatable spreading member 100. This spreading member 100 is mounted in an implement for spreading material as according to the foregoing embodiment. The spreading member 100 shown in Figures 12 and 13 has been situated in the implement in a way which is equal to the situation of the spreading member 3 in the foregoing embodiment. In this further embodiment, the spreading member 100 has spreading arms 101 which are situated radially with regard to the axis of rotation of the spreading member. The use of the guide members according to the foregoing embodiment or of the embodiment of the guide member 102 is possible with spreading members which can have spreading arms of a form which are chosen in a preferred way. The position of the guide member in the implement of the form of the guide member with the guide elements can be chosen more or less in dependence on the form of the spreading member with its spreading arms.

The guide member 102 according to the embodiment of Figures 12 and 13 is provided with eight spreading elements 103 to 110 inclusive. These guide elements are situated in about the same way as the guide elements in the foregoing embodiment according to Figures 8 - 11. The embodiment according to Figures 12 and 13 is provided with a larger number of guide elements. Owing hereto, the material picked up by the guide member 102 can be divided more accurately over the surface to be spread. In the same way as according to the foregoing embodiment, seen in plan view and in the operative position of the guide member, each of the guide elements has a part extending straight and parallel to the plane of symmetry 16 of the implement, respectively parallel to the plane 111, which plane 111 encloses the axis of rotation of the spreading member 100 and is parallel to the plane of symmetry 16. The ends of the guide elements 105 to 110 inclusive, which inner ends are directed to the spreading member 100, are bent from their respective straight parts, which are parallel to the plane 116, respectively to the normal direction of movement 15 of the implement in the direction of the spreading member. These bent inner ends of the spreading elements 105 to 107 extend obliquely forwards in the direction of the plane 16, as follows from Figure 12. The inner ends of these bent parts of the guide member 109 and 110 extend at least nearly perpendicularly to the plane 111. The outer ends of the guide elements 108, 109 and 110, which outer ends are turned away from the spreading member 100, extend parallel to the plane 111. The outer ends of the guide elements 103 to 107 inclusive, which outer ends are turned away from the spreading member 100, are bent in such a way that they extend obliquely rearwardly, with regard of the direction 15, in the direction of the plane 111, as is shown in Figure 12.

The guide elements 103 to 110 inclusive are connected with their upper sides to a supporting plate 112. The guide elements extend freely downwards from the plate 112. The supporting plate 12 extends at least nearly perpendicularly to the plane 111 in the position of operation of the guide member 102. The front side of the supporting plate 112 is extending forwardly of an extension 113 provided to a guide means adjoining the spreading member 100. The extension 113 extends in a direction from the plane 111 along the guide member 110 at that side of this guide member which is directed to the guide member 109 in a way as is shown in Figure 12. The side of the supporting plate 112 directed to the plane 111 is provided with a rim 114 extending obliquely upwardly in a direction of the plane 111. The supporting plate 112 is, in the same way as the plate 91 in the foregoing embodiment, straight and situated at a slightly higher level than the upper side of the spreading member 100. The guide member 102 is mounted to a carrier bracket 116. This bracket is hingeably mounted to carrier elements 97 connected to the hopper 8 in the same way as according to the foregoing embodiment. The guide member 102 is provided with bolts 117, the ends of which extend through longitudinal holes 118 in plate-like supports 119 of the carrier bracket 116. The longitudinal holes 118 extend perpendicularly to the plane 111, as seen in plan view according to Figure 12. The bolts 117, and with them the guide member 102, can be fixed in their position relative to the support 119 through the intermediation of wing-like nuts 120 provided on the bolt 117 or other fixing means which can be operated easily. In the operative position of the guide members 102, the supporting means 119 extends parallel to the spreading member 100. By shifting the bolts 117 in the oblong holes 118, the guide member 102 can be adjusted in a direction perpendicular to the plane 111 and parallel to the spreading member 100. The guide member 102 can be fixed at will in one of at least two different distances from the spreading member 100 and from the plane 111. The carrier bracket 116 is mounted to the hopper 8 by means of the carrier elements 107 and a fastening element 94 connected to the hopper 8 in the same way as according to the foregoing embodiment. As is shown in Figure 13, in its position of operation the guide member 102 rests with the carrier bracket 116 on a ring 121 which is fastened to the fastening element 94. The carrier bracket 116 is provided with an outstanding lip 122 which is provided with an oblong hole 123, through which the fastening element 94 is extending. As shown in Figures 12 and 13, the operative position of the guide member is fixed by a clip 124 which can be detached easily from the fastening element 94. The clip 124 is situated in the operative position of the guide member 102 above the ring 125 mounted around the fastening element 94 and lying above the lip 122.

The guide member 102 can be taken out of its position of operation, which position is shown clearly in Figure 13, by loosening the clip 124 from the fastening element 94. Then the carrier bracket 116 with the guide member 102 can be hinged around the centre line of the part 126 of the carrier bracket 116 in the supporting elements 97. Hereby the outstanding lip 122 can be moved along the fastening element 94 in an upward direction to a position in which the carrier bracket 116 is about parallel to the oblique side wall of the hopper 8, as shown in Figure 13. In this position, whereby the guide member 102 is taken out of its position of operation, the clip 124 can be mounted in a hole 130 situated near the upper side of the fastening element 94. The clip 124 then is adjoining the lower side of the outstanding lip 122 in such a way that the out-of-operation position of the guide member is fixed.

Just as is the case with the foregoing embodiment, the embodiment according to Figures 12 and 13 serves to spread material along the edge of a surface to be spread with material. Hereby, during operative movement along a track situated along the field edge, material will be spread so that there is obtained a spread pattern 99 as shown in Figure 9. Also in the embodiment according to Figures 12 and 13, the spreading implement is provided with two spreading members which are situated symmetrically with regard to the longitudinal plane 16, and each of which preferably spreads the material over equal distances on both sides of this plane 16 during operation. Also in this embodiment, the guiding member 102 is mounted around a part of the spreading member which is nearest to the field edge along which the material has to be spread, without material being spread over this field edge.

Just as in the foregoing embodiment, the guide member 102 is adjoining about half of the whole spread angle 21 over which the material will be spread by the spreading member during operation of the implement. Just as in the foregoing embodiment, in this embodiment the whole spreading angle will be about 180°. In this embodiment, the guide member 102 adjoins the spreading member over a spreading angle 83 of about 90°.

In dependence on the kind of the material which has to be spread, the position of the whole spreading angle 21 and therewith the part 83 of this spreading angle can shift around the axis of rotation of the spreading member more or less. In this further embodiment, the position of the guide member 102 relative.to the spreading member can be adjusted in dependence on this shifting of the spreading angle around the axis of rotation of the spreading member. A favourable adjusting of the position of the guide member relative to the spreading member may be obtained by adjusting the guide member 102 at least substantially perpendicularly to the plane 111. Hereby the guide member will be adjusted sidewardly with regard to the normal direction 15 of operative travel of the spreading implement.

The position of the guide member 102 shown in Figure 12 may be used to spread material which is usually spread out. With this kind of material, the material having reached the spreading member, after being supplied thereto through the outlet ports 11 of the member 10, will be spread from along a first spreading line 127 (Figure 12) in the direction 17 of rotation up to a last spreading line, which will be separated from line 127 over an angle which is equal to the angle 21. The material will be spread then in the desired way with the position of the guide member 102 in the position as is shown in Figure 12. Hereby the material thrown out through the angle 83 will be guided along the guide elements 103 to 110 inclusive, so that the material will be spread in a way to obtain the spread pattern 99 shown in Figure 9. The material moving along the spread line 127 will be picked up between the guide elements 109 and 110. The material spread by the spreading member over the angle 83 will be guided by the guide elements 109 to 103. Herewith the material leaving the spreading member through the angle 83 will be divided over at least a part of the width 82. The material which will be spread over the part of the angle 21 sidewards of the angle 83 will be divided without being guide by guiding elements and will be divided especially over the part of the width 82 which adjoins the foregoing, respectively following spreading track (i.e. the track 16 which is shown in the left side of Figure 8). The outer ends of the guiding elements 110, 109 and 108, which outer ends extend straight rearwardly, especially will serve to spread the material in the desired quantities along the field edge 31 so as to obtain the spread pattern 99.

When e.g. there will be spread material of a kind that moves more quickly over the spreading member and through the spreading arms thereof, then the first spreading line 127 will shift to the position shown in dotted lines in Figure 12, which dotted line is indicated by the reference number 128. To be able in this situation to catch all the material in the same way by the several guiding elements as is wished and as according to the situation with the usually used material to be spread, especially the inner ends of the guide elements adjoining the spreading member will have to be adjusted in a way which is conform the shifting of the first spread line 127, respectively the shifting of the spreading angle 21 over an angle 129. The outer ends of the guide elements, which are extending away from the spreading member, will preferably be held in their position relative to the direction 15 to be able to divide the material over a part of the width 82 and to obtain the spreading pattern 99. To hold these positions of the outer ends of the guiding elements relative to the direction 15, while the inner ends of the guide elements adjoining the spreading member 100 will still be able to catch the material in the desired way, can be obtained in a very simple way by adjusting the guide member at least substantially perpendicularly to the plane 111. By adjusting the guide member in this way at least substantially perpendicularly to the plane 111, this adjustment need be carried out over only a short distance. The length of the holes 118 can be chosen in dependence on the distance over which the guiding member 102 have to be displaced at a maximum, for example in dependence on the different kinds of material to be spread by the spreading implement.

At least one of the holes 118 can be provided with one or more extensions so as to be able to reach two or more situations of the bolts 117 in the holes 48 in a quick manner. These extensions can co-operate with projections on the bolts 117. As is shown in Figure 12, one of the carrying plates 119 can be provided with rectangular extensions in the outer ends of the oblong hole 118. These square extensions can co-operate with a square projection on the bolts 117. These square projections of the bolts 117 can be mounted at will in one of the separated square extensions of the hole 118 by lifting the bolts when shifting the same from one end to the other end of the hole 118.

The projection 113 overlapping the guide element 110 will prevent that material is spread out in front of the spreading member 102.

The invention is not limited to the embodiments described in the foregoing, but also relates to other embodiments based on the inventive idea.

## Claims

1. An implement for spreading material, comprising at least two spreader members (3, 4) which are arranged at opposite sides of a plane of symmetry (16), each of these spreader members being rotatable about an upwardly extending axis of rotation in opposite directions (17, 18), which in plan view at the outersides of the implement are directed backwards, the implement being provided at at least one outerside with respect to the plane of symmetry (16) with a guide member (81) for the material to be spread, said guide member (81) comprising spreading elements (103 - 109) having upstanding parts, characterized in that at least a number of the spreading elements (103 - 109) have upstanding parts which are extending at least partly parallel to the plane of symmetry (16) and are provided with a bend at the rear ends, which with respect to the direction of movement (15) of the implement extend obliquely rearwardly in the direction of the plane of symmetry (16).

2. An implement as claimed in claim 1, characterized in that a number of the spreading elements (103 - 109) have a free end (88, 89, 90) extending in the direction of movement (15) of the implement.

3. An implement as claimed in claim 1 or claim 2, characterized in that only the rearmost spreading elements are provided with a bend in the direction of the plane of symmetry (16).

4. A method for spreading material over a surface area with the aid of an implement comprising at least two spreader members (3, 4), each of which can spread the material during travel of the implement over the field to both sides of the implement over at least substantially equal distances, wherein for spreading the material to at least substantially one side of the implement the action of one of the spreader members is stopped, characterized in that for spreading along a field edge the spreader member (3) situated at the side of the field edge will rotate, whereas the other spreader member (4) is stopped and that to the implement at the side of the field edge a guide member (81) is connected which collects the material spread by the rotating spreader member (3) and diverts the material away from the field edge backwards and to the side where the spreader member (4) which is stopped is situated.

5. A guide member corresponding to the guide member as defined in any one of the preceding claims and intended to be used in an implement according to one of the preceding claims.

## Patentansprüche

1. Gerät zum Streuen von Gut mit mindestens zwei Streugliedern (3, 4), die auf gegenüberliegenden Seiten einer Symmetrieebene (16) angeordnet sind, wobei jedes dieser Streuglieder um eine aufwärts gerichtete Drehachse in entgegengesetzten Richtungen (17, 18) drehbar ist, die in der Draufsicht an den Außenseiten des Gerätes nach hinten verlaufen, wobei das Gerät an mindestens einer Außenseite in bezug auf die Symmetrieebene (16) ein Führungsglied (81) für das auszustreuende Gut aufweist, wobei das Führungsglied (81) Streuelemente (103 bis 109) mit aufrechten Teilen aufweist,
dadurch gekennzeichnet, daß mindestens eine Anzahl der Streuelemente (103 bis 109) aufrechte Teile aufweist, die sich zumindest teilweise parallel zur Symmetrieebene (16) erstrecken und eine Krümmung an den hinteren Enden aufweisen, die sich relativ zur Arbeitsrichtung (15) des Gerätes schräg nach hinten in Richtung auf die Symmetrieebene (16) erstrecken.

2. Gerät nach Anspruch 1,
dadurch gekennzeichnet, daß eine Anzahl der Streuelemente (103 bis 109) ein sich in Arbeitsrichtung (15) des Gerätes erstreckendes freies Ende (88, 89, 90) aufweist.

3. Gerät nach Anspruch 1 oder Anspruch 2,
dadurch gekennzeichnet, daß nur die hinteren Streuelemente eine sich in Richtung auf die Symmetrieebene (16) erstreckende Krümmung aufweisen.

4. Verfahren zum Ausstreuen von Gut auf eine Fläche mit Hilfe eines Gerätes, das mindestens zwei Streuglieder (3, 4) umfaßt, von denen jedes das Gut während der Fahrt des Gerätes über das Feld auf beide Seiten des Gerätes in zumindest im wesentlichen gleicher Weite ausstreuen kann, wobei zum Streuen des Gutes auf zumindest im wesentlichen eine Seite des Gerätes eines der Streuglieder außer Betrieb gesetzt wird,
dadurch gekennzeichnet, daß zum Streuen eines Feldrandes das auf der Seite des Feldrandes angeordnete Streuglied (3) in Drehung versetzt wird, während das andere Streuglied (4) gestoppt wird, und daß auf der Seite des Feldrandes eine Führungsglied (81) mit dem Gerät verbunden ist, das das von dem rotierenden Streuglied (3) ausgestreute Gut auffängt und das Gut von dem Feldrand weg und zurück zu der Seite lenkt, auf der das Streuglied (4), das gestoppt wird, angeordnet ist.

5. Führungsglied gemäß dem Führungsglied, das in einem der vorhergehenden Ansprüche beschrieben ist und dazu bestimmt ist, in einem Gerät nach einem der vorhergehenden Ansprüche verwendet zu werden.

## Revendications

1. Outil destiné à épandre une matière, comportant au moins deux éléments épandeurs (3, 4) qui sont agencés au niveau de côtés opposés d'un plan de symétrie (16), chacun de ces éléments épandeurs pouvant tourner autour d'un axe de rotation s'étendant vers le haut, dans des directions opposées (17, 18) qui, dans une vue de dessus, au niveau des côtés extérieurs de l'outil, sont dirigées vers l'arrière, l'outil étant muni au niveau d'au moins un côté extérieur par rapport au plan de symétrie (16) d'un organe de guidage (81) destiné à la matière à épandre, ledit organe de guidage (81) comportant des éléments d'épandage (103 - 109) ayant des parties droites, caractérisé en ce qu'au moins plusieurs éléments d'épandage (103 à 109) ont des parties droites qui s'étendent au moins partiellement parallèlement au plan de symétrie (16), et sont munis d'une courbure au niveau des extrémités arrière qui, par rapport à la direction de déplacement (15) de l'outil, s'étend en oblique vers l'arrière en direction du plan de symétrie (16).

2. Outil selon la revendication 1, caractérisé en ce que plusieurs éléments d'épandage (103 à 109) ont une extrémité libre (88, 89, 90) s'étendant dans la direction de déplacement (15) de l'outil.

3. Outil selon la revendication 1 ou 2, caractérisé en ce que seuls les éléments d'épandage les plus vers l'arrière sont munis d'une courbure en direction du plan de symétrie (16).

4. Procédé pour épandre une matière sur une superficie à l'aide d'un outil comportant au moins deux éléments épandeurs (3, 4), qui peuvent chacun épandre la matière pendant un déplacement de l'outil sur-le-champ des deux côtés de l'outil sur au moins des distances sensiblement égales, l'action d'un des éléments épandeurs étant arrêtée pour épandre la matière vers au moins sensiblement un côté de l'outil, caractérisé en ce que pour épandre le long d'un bord de champ, l'élément épandeur (3) situé au niveau du côté du bord de champ va tourner, tandis que l'autre élément épandeur (4) est arrêté, et en ce qu'un organe de guidage (81) est connecté à l'élément épandeur de l'outil situé au niveau du côté du bord de champ, qui récupère la matière épandue par l'élément épandeur tournant (3), et dévie la matière loin du bord de champ vers l'arrière, et vers le côté où est situé l'élément épandeur (4) qui est arrêté.

5. Organe de guidage correspondant à l'organe de guidage tel que défini dans l'une quelconque des revendications précédentes, et prévu pour être utilisé dans un outil selon l'une quelconque des revendications précédentes.
